# EUROPEAN PATENT APPLICATION

(11) **EP 3 623 649 A1**
(43) Date of publication of application: **18.03.2020**
(21) Application number: 18194646.8
(22) Date of filing: 14.09.2018
(51) Int. Cl.: F16B 41/00, F16B 37/14, F16B 39/10

(54) **ANTI-UNSCREWING AND COVERING SYSTEM FOR HEADS OF BOLTS USED TO FIX A RIM OF THE WHEEL OF AN INDUSTRIAL VEHICLE**

(71) Applicant: Ruspa Officine S.P.A., 10070 Robassomero (IT)
(72) Inventor: DE RINALDIS, Fabio, 10136 Torino (IT)
(74) Representative: Bongiovanni, Simone

(57) **Abstract**

An anti-unscrewing and covering system (1) for heads (3) of bolts (2) used to fix a rim (4) of the wheel of an industrial vehicle to the hub, said system comprising a plurality of covering elements (10), which are each designed to be coupled to a respective head (3) of bolts (2) engaging respective through holes (8) arranged along a circular path of a portion (6) of the rim (4). Each covering element (10) comprises a cup-shaped body (12) defining an inner cavity (14), which is open towards the outside and is designed to house a respective head (3) coupled to the cup-shaped body (12), and an integral appendix (16), which radially extends from a front portion of a peripheral edge (14-b) of the cup-shaped body (12) towards the outside of the cup-shaped body (12) itself. The appendix (16) has an end portion (16-c), which is configured to strike against a rear portion (12-b) of an adjacent cup-shaped body (12), so that the covering elements (10) arranged on the respective heads form a continuous chain of covering elements arranged in contact with one another in order to form a crown of interconnected covering elements (10). The crown of covering elements prevents the bolts from rotating and, hence, from being unscrewed.

## Description

The invention relates to an anti-unscrewing and covering system for heads of bolts used to fix a rim of the wheel of an industrial vehicle.

Covering systems are known for heads of bolts used to fix a rim of the wheel of an industrial vehicle to the hub. In these systems, a plurality of cup-shaped covering elements are each designed to be coupled to a respective head so as to cover it and protect it against outer agents (water, mud, debris, hydrocarbons, etc.), which can potentially damage the bolt during the use of the vehicle.

These systems are aimed at preserving the bolts from corrosion and oxidation so as to avoid the formation of metal oxides, which can make it hard for the bolt to be removed from the hub and, hence, for the wheel to be replaced.

The connection between the covering element and the head of the screw is usually obtained by using elastic elements, which help apply a force on the head of the bolt.

For example, European patent EP-B-1.258.641 of the Applicant discloses a covering element for a threaded connecting member, wherein a cup-shaped body defines an inner cavity, which is coaxial to an axis and is designed to house at least an end portion of the threaded connection element. The covering element is provided with a plurality of elongated elastic appendixes, which are integral to the cup-shaped body, extend in directions substantially parallel to the axis, and are designed to exert radial pressure upon the aforesaid end portion so as to establish a firm connection of the cup-shaped body one the threaded connecting member.

The covering elements used in known systems, however, cannot be uncoupled from the heads due to the vibrations generated when the vehicle is driving. Furthermore, the heads themselves can change their original position due to a bolt unscrewing process.

Anti-unscrewing system are known, which are designed to visually signal the angular displacement of the covering element/of the head relative to the assembling position; among these systems, we would like to draw attention to British patent application GB2510170, which discloses a safety device to connect the covering elements of the nuts of the wheels together, which also acts as a rotation indicating device. The covering elements are connected to one another by respective safety devices, so as to inhibit the rotation of the nuts of the wheels. Each covering element is further provided with a pointer, which indicates the angular position (and, hence, the rotation relative to an initial position) of the covering element and/or of the nut.

The known systems described above are impractical and complicated to be assembled and comprise a large number of parts made of a plastic material, which are connected to one another by means of a snapping system.

The object of the invention is to provide an anti-unscrewing system, which also acts as a cover for the heads of the bolts used to fix a rim of the wheel of an industrial vehicle, said system being easy to be installed, having a simple structure and featuring limited costs.

The aforesaid object is reached by the invention as it relates to an anti-unscrewing and covering system for heads of bolts used to fix a rim of the wheel of an industrial vehicle to the hub, said system comprising a plurality of covering elements, which are each designed to be coupled to a respective head in order to cover it, the bolts being designed to engage respective through holes arranged along a circular path of a portion of the rim, **characterized in that** each covering element comprises a cup-shaped body defining an inner cavity, which is open towards the outside and is designed to house a respective head coupled to the cup-shaped body, and an integral appendix, which radially extends from a front portion of a peripheral edge of the cup-shaped body towards the outside of the cup-shaped body itself; said appendix has an end portion, which is configured to strike against a rear portion of an adjacent cup-shaped body, so that the covering elements arranged on the respective heads form a continuous chain of covering elements arranged in contact with one another in order to create a crown of interconnected covering elements, wherein each covering element exerts a force upon the adjacent one so as to obtain a force developing along said circular path, which keeps the covering elements in contact with one another so that, hence, they are all slightly compressed; the crown of covering elements prevents the bolts from rotating and, hence, from being unscrewed.

The invention will now be described with reference to the accompanying drawings, which show a preferred non-limiting embodiments thereof, wherein:
figure 1 shows, in a partially exploded perspective view, an anti-unscrewing and covering system for bolt heads according to the invention;
figure 2 shows, on a larger scale, a detail of the system of figure 1;
figure 3 shows, in a front view, a rim of a vehicle without the system according to the invention; and
figure 4 shows, in a front view, a rim of a vehicle with the system according to the invention.

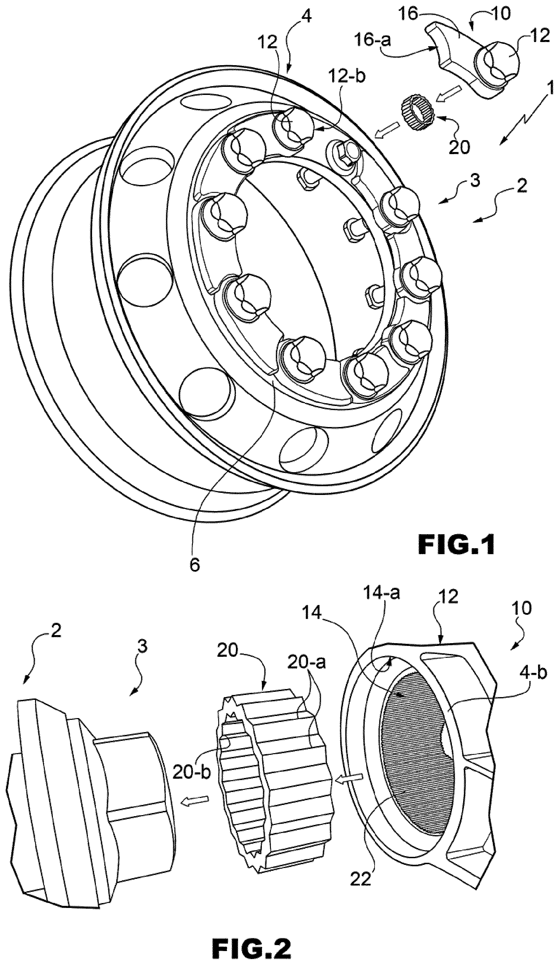

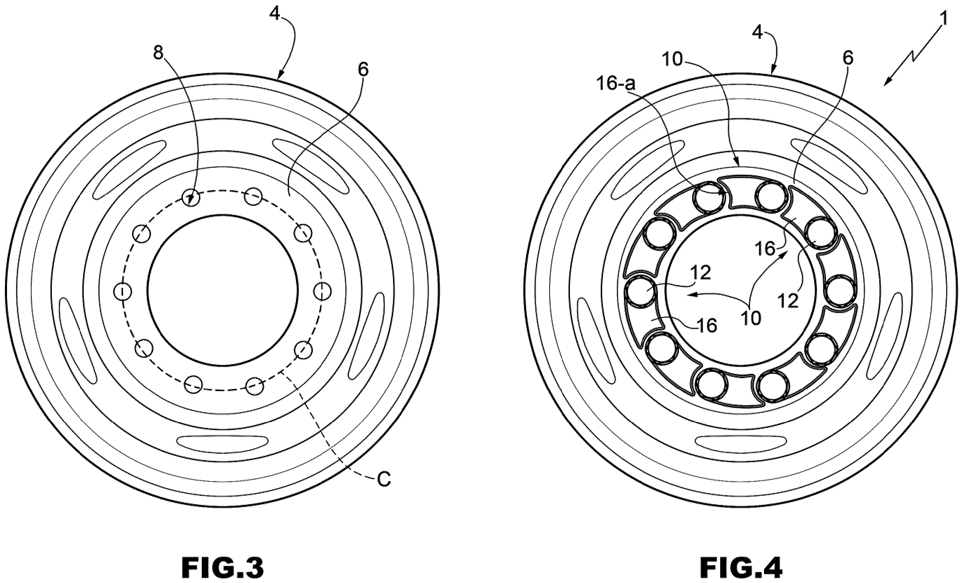

**In** **figures 1** **and** **4**, number 1 indicates, as a whole, an anti-unscrewing and covering system for heads 3 of bolts 2 used to fix a rim 4 of the wheel of an industrial vehicle (which is not shown) to the hub of the vehicle (which is not shown). The bolt 2 is made of a metal material and has a known head 3 with a hexagonal cross section.

The rim 4 is also known and comprises a front annular portion 6, on which a plurality of circular through holes 8 (figure 3) are made, which are arranged along a circular path C and are designed to house respective bolts 2 so as to fix the rim 4 to the hub of the vehicle (which is not shown).

The system 1 comprises a plurality of covering elements 10, which are each designed to be coupled to a respective head 3 so as to cover it, this protecting it against outer agents (water, mud, debris, hydrocarbons, etc.), which can potentially damage the bolt 2 when the vehicle (which is not shown) is driving. In this way, the bolts 2 are preserved from corrosion and from the formation of metal oxides, which can make it hard for the bolt 2 to be removed from the hub (which is not shown). Furthermore, the covering elements assume and angularly stable position, relative to one another, thus preventing the bolts 2 from being unscrewed.

Each covering element 10 is manufactured as one single piece made of a plastic material and comprises a cup-shaped body 12 defining a substantially cylindrical inner cavity 14 (see figure 2) provided with an opening 14-a, which is open towards the outside and is designed to house a respective head 3, which is coupled to the cup-shaped body 12 through interference in the ways described hereinafter. By so doing, the cup-shaped body 12 totally covers the head 3 with a peripheral edge 4-b of the opening 14-a, which strikes against the front annular portion 6 of the rim 4.

Each covering element 10 further comprises an integral appendix 16, which radially extends from a front portion of the peripheral edge 4-b of the cup-shaped body 12 towards the outside of the cup-shaped body 12 itself.

The appendix 16 has an end portion 16-a, which is configured to strike against a rear portion 12-b of an adjacent cup-shaped body 12, so that the covering elements 10 arranged on the respective heads 3 form a continuous chain of covering elements arranged in contact with one another in order to form a crown of interconnected covering elements 10 (see figure 4) having fixed angular positions relative to one another.

In this way, the covering elements 10 are prevented from detaching, as each of them exerts a force upon the adjacent one and in the crown a stress arises, which develops along the closed path C and keeps the covering elements 10 in contact with one another so that they are all slightly compressed. The crown assembly formed in the way described above prevents the bolts from rotating and, hence, from being unscrewed. Furthermore, this assembly has a good aesthetic appeal.

The appendix 16, seen in a plan view, is delimited by two curved sides, which are spaced apart from one another by a distance that is substantially equal to the diameter of the opening 4-a of the cup-shaped body 12, and by a C-shaped end side, which defines the end portion 16-a, which strikes against the rear portion 12-b of an adjacent cup-shaped body 12.

The system 1 comprises a plurality of elastic annular inserts 20 (figures 1 and 2), each designed to be fitted on a respective head 3, thus being coupled through interference on the head itself by means of an inner wall thereof; the cup-shaped body 12, in turn, is arranged so as to cover the head 3 and the annular insert 20 and an inner wall of the cup-shaped body 12 is coupled through interference to an outer wall of the elastic annular insert 20. In this way, the annular insert 20 is interposed between the head 3 and the cup-shaped body 12.

The inner wall laterally defining the cavity 14 of the cup-shaped body 12 is substantially cylindrical and is provided with a plurality of ribs 22 extending in an axial direction; the ribs 22 are coupled through interference to the outer wall of the elastic annular insert 20.

The annular insert 20 comprises a plurality of flat portions, which are adjacent and integral to one another, each flat portion forming an obtuse angle relative to the adjacent portions so as to form a tubular element having, on the outside, a plurality of outer corners 20-a, which are designed to strike against the inner wall (ribs 22) of the cup-shaped body 12, and a plurality of inner corners 20-b, which are designed to strike against the head 3.

According to a variant (which is not shown herein), as an alternative to the embodiment described above, the annular inserts 20 could not be used and, in this case, the inner wall of the cup-shaped body 12 would be directly in contact with the outer walls of the head 3.

According to a further variant (which is not shown herein), as an alternative to the embodiments described above, the annular inserts 20 could be integral to the respective cup-shaped bodies 12. In this case, the cup-shaped body would have, on the inside, an inner wall, which defines a plurality of inner corners 20-b designed to strike against the head 3.

In use, a user fits the annular inserts 20 on the respective heads 3. Subsequently, a first covering element 10 is mounted by placing the cup-shaped body 12 so as to cover the respective head 3; the stable angular positioning of the covering element 10 relative to the head is ensured by the outer corners 20a of the annular inserts 20, which strike against the ribs 20. Then, a covering element 10 is mounted adjacent to the first one mounted before by placing the end portion 16-b of the integral appendix 16 in contact with the rear portion of the already mounted covering element. The operations are repeated for all bolts so as to form a continuous chain of covering elements arranged in contact with one another.

Therefore, the system 1 is very easy to be installed. Furthermore, the covering elements are manufactured through moulding by means of a plastic material. The manufacturing costs of these elements are very low. As to the plastic material used, it can be Nylon and glass fibres or Nylon.

## Claims

1. An anti-unscrewing and covering system (1) for heads (3) of bolts (2) used to fix a rim (4) of the wheel of an industrial vehicle to the hub, said system comprising a plurality of covering elements (10), which are each designed to be coupled to a respective head (3) in order to cover it, the bolts (2) being designed to engage respective through holes (8) arranged along a circular path (C) of a portion (6) of the rim (4),
**characterized in that** each covering element (10) comprises a cup-shaped body (12) defining an inner cavity (14), which is open towards the outside and is designed to house a respective head (3) coupled to the cup-shaped body (12), and an integral appendix (16), which radially extends from a front portion of a peripheral edge (14-b) of the cup-shaped body (12) towards the outside of the cup-shaped body (12) itself; said appendix (16) has an end portion (16-a), which is configured to strike against a rear portion (12-b) of an adjacent cup-shaped body (12), so that the covering elements (10) arranged on the respective heads form a continuous chain of covering elements arranged in contact with one another in order to create a crown of interconnected covering elements (10), wherein each covering element exerts a force upon the adjacent one so as to obtain a force developing along said circular path (C), which keeps the covering elements (10) in contact with one another so that, hence, they are all slightly compressed; the crown of covering elements prevents the bolts from rotating and, hence, from being unscrewed.

2. An anti-screwing and covering system according to claim 1, wherein said end portion (16-a) has, in plan view, a C-shaped profile.

3. An anti-screwing and covering system according to claim 1, wherein the appendix (16), seen in a plan view, is delimited by two curved sides, which are spaced apart from one another by a distance that is substantially equal to the diameter of the opening (4-a) of the cup-shaped body (12), and by a C-shaped end side, which defines the end portion.

4. An anti-screwing and covering system according to one of the preceding claims, wherein a plurality of elastic annular inserts (20) are provided, each designed to be fitted on a respective head (3), thus being coupled through interference on the head itself by means of an inner wall thereof; the cup-shaped body (12), in turn, is arranged so as to cover the head (3) and the annular insert (20) and an inner wall of the cup-shaped body (12) is coupled through interference to an outer wall of the elastic annular insert (20), so that the annular insert (20) is interposed between the head (3) and the cup-shaped body (12).

5. An anti-screwing and covering system according to claim 4, wherein the inner wall laterally defining the cavity (14) of the cup-shaped body is substantially cylindrical and is provided with a plurality of ribs (22) extending in a radial direction; the ribs (22) are coupled through interference to the outer wall of the elastic annular insert (20).

6. An anti-screwing and covering system according to claim 4 or 5, wherein the annular insert (20) comprises a plurality of flat portions, which are adjacent and integral to one another, each flat portion forming an obtuse angle relative to the adjacent portions so as to form a tubular element having, on the outside, a plurality of outer corners (20-a), which are designed to strike against the ribs (22) of the cup-shaped body (12), and a plurality of inner corners (20-b), which are designed to strike against the head (3).
